# EUROPÄISCHE PATENTSCHRIFT

(11) **EP 2 910 584 B1**
(45) Veröffentlichungstag und Bekanntmachung des Hinweises auf die Patenterteilung: **10.01.2018**
(21) Anmeldenummer: 15153043.3
(22) Anmeldetag: 29.01.2015
(51) Int. Cl.: C08G 6/02, C09B 67/46, C09D 5/02, C09D 17/00, C09D 161/02

(54) **Dispergierharze für Pigmentpräparationen mit geringem flüchtigen organischen Anteil**
Dispersing resins for pigment preparations with low volatile organic content
Résine de dispersion pour préparations de pigment à teneur organique volatile réduite

(30) Priorität: 24.02.2014 DE 102014203231
(43) Veröffentlichungstag der Anmeldung: 26.08.2015
(73) Patentinhaber: Evonik Degussa GmbH, 45128 Essen (DE)
(72) Erfinder: Veit, Thomas, 58097 Hagen (DE); Ewald, Michael, 45768 Marl (DE); Engelke, Daniel, 46286 Dorsten (DE); Burian, Bettina, 46282 Dorsten (DE); Alzer, Heiko, 45481 Mülheim an der Ruhr (DE); Schwarze, Jan, 46244 Bottrop (DE); Reuter, Ellen, 44799 Bochum (DE); Kleinsteinberg, Frank, 46519 Alpen (DE); Roland, Katrin, 45257 Essen (DE); Rödiger, Sandra, 44795 Bochum (DE); Retzlaff, Erika, 45772 Marl (DE); Kroes, Sylvia, 45770 Marl (DE)

(56) Entgegenhaltungen:
- WO-A1-2006/097378
- AU-A- 2 425 167
- GB-A- 629 481
- DAVID F GOULD: "Phenolic Resins", 1. Januar 1959 (1959-01-01), PHENOLIC RESINS, XX, XX, PAGE(S) I - II,34, XP002710765, * das ganze Dokument *

## Beschreibung

Die vorliegende Erfindung betrifft Dispergierharze für konventionelle lösemittelhaltige Pigmentpräparationen mit einem geringen bis sehr geringen Anteil flüchtiger organischer Substanzen und deren Verwendung in lösemittelhaltigen Beschichtungsstoffen wie beispielsweise Farben, Lacke, Klebstoffen, Tinten oder Druckfarben und zum Einfärben von Kunststoffen. Die mit diesen Harzen hergestellten Pigmentpräparationen sind vergilbungsfrei, bewitterungsstabil, niedrigviskos und farbstark.

Für die zuverlässige Dispergierung und Stabilisierung von Pigmenten in Beschichtungssystemen verwendet man im allgemeinen Dispergiermittel, um so die für eine effektive Dispergierung der Feststoffe benötigten mechanischen Scherkräfte zu reduzieren und gleichzeitig möglichst hohe Füllgrade zu realisieren. Die Dispergiermittel unterstützen das Aufbrechen von Agglomeraten, benetzen und belegen als oberflächenaktive Materialien die Oberfläche der zu dispergierenden Partikel und stabilisieren diese gegen eine unerwünschte Reagglomeration. Die Stabilisierung der Pigmente ist in der Lackindustrie von großer Bedeutung, denn Pigmente bestimmen als wichtiger Formulierungsbestandteil das optische Erscheinungsbild und die physikalisch-chemischen Eigenschaften einer Beschichtung. Damit sie in der Beschichtung ihre Wirkung optimal entfalten können, müssen sie während des Dispergierprozesses gleichmäßig und feinteilig im Lack verteilt werden. Die Verteilung muss stabilisiert werden, damit dieser Zustand bei der Herstellung, der Lagerung, der Verarbeitung und der anschließenden Filmbildung erhalten bleibt. Eine Wiedervereinigung der Primärteilchen und Aggregate kann zu Bodensatzbildung, Viskositätserhöhung, Glanzgradverlusten, ungenügender Farbtiefe, geringem Deckvermögen, Auf- und Ausschwimmen der Pigmente und schlecht reproduzierbaren Farbtönen führen.

In wässrigen Pigmentpräparationen werden Pigmente ausschließlich durch Netz- und Dispergiermittel stabilisiert, während in lösemittelhaltigen Pigmentpräparationen die Dispergierung oft durch Dispergierharze unterstützt wird (Brock, Groteklaes, Mischke, Lehrbuch der Lacktechnologie, Vincentz Verlag Hannover 1998, S. 240). Traditionell werden in lösemittelhaltigen Lacksystemen bindemittelhaltige Pigmentkonzentrate eingesetzt. Der Einsatz von Dispergierharzen ist hier notwendig, um eine breite Verträglichkeit und damit Einsetzbarkeit der Konzentrate zu gewährleisten [Glöckner et. al, Farbe und Lack 2 (2010) 19]. Diese Harze müssen eine geringe Eigenfärbung und gleichzeitig eine breite Löslichkeit in unterschiedlichsten Löse- und Bindemitteln aufweisen.

Beispiele solcher Dispergierharze - auch Anreibeharze genannt - sind u. a Harnstoffaldehydharze, Ketonaldehydharze und Polyurethanharze. Harnstoffaldehydharze zeichnen sich durch eine breite Löslichkeit und Verträglichkeit, ein hohes Pigmentbindevermögen und eine geringe Lösungsviskosität aus [Stoye, Freitag, Lackharze, Carl Hanser Verlang München Wien 1996, S. 174f]. Auch Ketonaldehydharze, beispielsweise auf der Basis von Trimethylcyclohexanon, eigenen sich als Anreibeharze. In Bezug auf Pigmentbindevermögen und Lösungsviskosität übertreffen sie die Harnstoffaldehydharze sogar [Stoye, Freitag, Lackharze, Carl Hanser Verlang München Wien 1996, S. 174f]. Die Patentschrift US 8,017,686 beschreibt Polyurethanharze als Anreibeharze, allerdings nur für wässrige Systeme.

AU 24257 67 A beschreibt wasserlösliche, viskose Ketonaldehydharze, welche diese aus Aceton oder Methylethylketon und Formaldehyd hergestellt werden.

Anreibeharze dem Stand der Technik entsprechend eignen sich aus verschiedenen Gründen jedoch nicht für die Herstellung lösemittelhaltiger Pigmentpräparationen mit einem geringen bis sehr geringen Anteil flüchtiger organischer Substanzen.

Harnstoffaldehydharze wie Laropal® A81 der BASF sind bei 23 °C und einem Druck von 101325 Pa fest. Die notwendige niedrige Viskosität kann nur durch Zusatz von Lösemitteln erreicht werden. Bei einem oftmals notwendigen Lösemittelanteil von bis zu 50 Gew.-% zur Erreichung einer verarbeitbaren Lösungsviskosität des Festharzes ist damit die Formulierung gerade moderner lösemittelarmer Beschichtungszusammensetzungen unmöglich.

Mischungen aus Ketonaldehydharzen mit Polyethern, wie Tego® VariPlus UC der Evonik Industries, sind bei 23 °C und 101325 Pa flüssig. Die Fließfähigkeit von Tego® VariPlus UC geht allein auf die Anwesenheit von Polyethern in der Mischung zurück, was erneut zu einem unerwünschten Verdünnungseffekt des eigentlichen Harzes führt. Darüber hinaus ist das Produkt in dem vielfach gewünschten Ausmaß nicht vergilbungs- und temperaturstabil. Der Einsatz dieses Harzes in Beschichtungen kann somit über die Zeit zu Verfärbungen in der Beschichtung führen.

Der vorliegenden Erfindung lag daher die Aufgabe zugrunde, ein Anreibeharz bereitzustellen, das die Herstellung lösemittelarmer Pigmentpräparationen für lösemittelarme Beschichtungen erlaubt und dabei verbesserte anwendungstechnische Eigenschaften aufweist.

Diese Aufgabe konnte überraschenderweise durch Ketonaldehydharze gemäß der vorliegenden Erfindung gelöst werden. Die erfindungsgemäße Kondensation von mindestens einem Aldehyd und mindestens einem CH-aciden Keton liefert überraschenderweise fließfähige Anreibeharze, nachfolgend auch Kondensationsharze genannt, mit denen Pigmentpräparationen für lösemittelarme Beschichtungen darstellbar sind. Gleichzeitig beeinflussen die erfindungsgemäßen Anreibeharze wichtige Lackeigenschaften wie Filmhärte, Trocknungsgeschwindigkeit, Verträglichkeit und Vergilbungsbeständigkeit nicht. So sind die erfindungsgemäßen Harze insbesondere vergilbungs- und temperaturstabil. Weiterhin können die erfindungsgemäßen Harze ohne Zusatz von verflüssigenden Komponenten, wie z. B. Lösemitteln oder Polyethern, eingesetzt werden, da die erfindungsgemäßen Harze per se fließfähig sind. Ein weiterer Vorteil ist, dass bei den erfindungsgemäßen Harzen kein Harnstoff enthalten sein muss.

Ein erster Gegenstand der Erfindung sind daher bei einer Temperatur von 23 °C und einem Druck von 101325 Pa fließfähige Harze auf Basis von aliphatischen Ketonen , ausgewählt aus der Gruppe bestehend aus Heptanon-2, Heptanon-3, Heptanon-4, Oktanon-2, Oktanon-3, Undecanon-2, 5-Methylhexan-2-on (Methylisoamylketon) oder 2-Methylpentan-4-on (Methylisobutylketon) oder Mischungen daraus und Aldehyden , ausgewählt aus der Gruppe bestehend aus Formaldehyd, Acetaldehyd, n-Butyraldehyd und/oder iso-Butyraldehyd, Amylaldehyd sowie Dodecanal oder Mischungen daraus, wobei das molare Keton-Aldehydverhältnis zwischen 1 : 1,5 und 1 : 2,5 liegt, mit relativen Molmassen Mn zwischen 350 und 900 g/mol, wobei die relativen Molmassen durch Größenausschlusschromatographie (SEC) bestimmt werden..

Im Rahmen der vorliegenden Erfindung ist es dabei wesentlich, dass das molare Verhältnis von Keton zu Aldehyd im Bereich von 1 : 1,5 bis 1 : 2,5 liegt, insbesondere im Bereich von 1 : 1,7 bis 1 : 2,2. Für den Fachmann ist es überraschend und aus dem Stand der Technik auch nicht herleitbar, dass in diesen ausgewählten Molverhältnisbereichen fließfähige Kondensationsharze erhalten werden, die sich besonders für den Einsatz als Dispergierharze eignen.

Als Aldehyde für die Herstellung der erfindungsgemäßen Kondensationsharze eignen sich unverzweigte oder verzweigte Aldehyde, ausgewählt aus der Gruppe bestehend aus Formaldehyd, Acetaldehyd, n-Butyraldehyd und/oder iso-Butyraldehyd, Valerianaldehyd sowie Dodecanal oder Mischungen daraus. In einer besonders bevorzugten Ausführungsform ist Formaldehyd als Aldehyd in den erfindungsgemäßen Harzen enthalten, entweder allein oder in Mischungen mit den vorab genannten Aldehyden. Auch die Verwendung von Formaldehydkondensaten wie Trioxan oder Paraformaldehyd ist möglich, wobei der Einsatz von Paraformaldehyd bevorzugt ist. Das benötigte Formaldehyd kann beispielsweise auch als ca. 20 bis 40 Gew.-%ige wässrige oder alkoholische (z. B. Methanol oder Butanol) Lösung eingesetzt werden. Im Rahmen der vorliegenden Erfindung können insbesondere auch unterschiedliche Formen an Formaldehyd eingesetzt werden, beispielweise eine Kombination aus Paraformaldehyd und einer Lösung.

Als Ketone zur Herstellung der erfindungsgemäßen Kondensationsharze eignen sich grundsätzlich alle aus der Literatur bekannten CH-aciden Ketone, ausgewählt aus der Gruppe bestehend aus , Heptanon-2, Heptanon-3, Heptanon-4, Oktanon-2, Oktanon-3, Undecanon-2, 5-Methylhexan-2-on (Methylisoamylketon) oder 2-Methylpentan-4-on (Methylisobutylketon) oder Mischungen daraus.

Insbesondere bevorzugt enthalten die erfindungsgemäßen Harze keinen Harnstoff. Darüber hinaus besteht auch nicht mehr die Notwendigkeit der Abmischung der Harze mit verflüssigenden Komponenten, wie z. B. Lösemitteln oder Polyethern, da die erfindungsgemäßen Harze per se fließfähig sind.

Die erfindungsgemäßen Harze weisen allgemein Glasübergangstemperaturen von 0 °C oder weniger auf, insbesondere von 0 °C bis -28 °C, bevorzugt von -5 °C bis -20 °C, besonders bevorzugt -10 °C bis -16 °C auf, bestimmt nach DIN 53765.

Die erfindungsgemäßen Harze haben relative Molmassen Mn bevorzugt zwischen 400 und 800 g/mol, besonders bevorzugt zwischen 450 und 750 g/mol.

Die relativen Molmassen werden durch Größenausschlusschromatographie (SEC) bestimmt. Dazu werden drei Säulen von Merck (PS 400, 250*7 mm, PS 40, 250*7 mm, und PS 1,250*7 mm) mit einer Teilchengröße von 5 µm in Reihe kombiniert. Nach der Kalibration werden 20 µl der Kondensationsharzlösung in Tetrahydrofuran (Kondensationsharz = 20 mg/ml) bei 40 °C mit einem Rheodyne 7125 Injektor injiziert und mit einer Flussrate von 1 ml/min (HPLC Pumpe 510 von Waters) bei 40 °C mit entgastem Tetrahydrofuran als mobiler Phase und einem Differentialrefraktometer bei 40 °C (Model 410 von Waters) analysiert. Die Auswertung erfolgt nach Kalibration gegen Polystyrolstandards, die in der zuvor beschriebenen Weise durchgeführt wird. Polystyrolstandards (Standard 1 Mp 377400, Mp 96000, Mp 20650, Mp 1300, Mp 162; Standard 2 Mp 283300, Mp 50400, Mp 10850, Mp 2930, Mp 980; Standard 3 Mp 218800, Mp 68900, Mp 10050, Mp 1940, Mp 580; Mp = Molare Masse im Peakmaximum) sind beispielsweise bei Merck oder Polymer Laboratories kommerziell erhältlich.

Die erfindungsgemäßen Kondensationsharze dieser Zusammensetzung haben Viskositäten (93 Gew.-% in Butylacetat) von 5 Pas bis 50 Pas, bevorzugt von 10 Pas bis 40 Pas und besonders bevorzugt von 20 Pas bis 35 Pas, gemessen mit einem Anton Paar Rotationsviskosimeter M102 und der Messgeometrie CP50/2 bei 23 °C und einer Scherrate von 1/100s.

In einer ganz besonders bevorzugten Ausführungsform der vorliegenden Erfindung basiert das Harz auf 2-Methylpentan-4-on als Ketonkomponente und Formaldehyd als Aldehydkomponente im Verhältnis 1 : 1,7 bis 1 : 2,2. Diese besonders bevorzugten Harze weisen Glasübergangstemperaturen von 0 °C bis -28 °C, bevorzugt von -5 °C bis -20 °C, besonders bevorzugt -10 °C bis -16 °C auf, bestimmt nach DIN 53765, relative Molmassen Mn zwischen 350 und 900 g/mol, bevorzugt zwischen 400 und 800 g/mol, besonders bevorzugt zwischen 450 und 750 g/mol und Viskositäten (93 Gew.-% in Butylacetat) von 5 Pas bis 50 Pas, bevorzugt von 10 Pas bis 40 Pas und besonders bevorzugt von 20 Pas bis 35 Pas.

Ebenfalls Gegenstand der vorliegenden Erfindung sind Verfahren zur Herstellung der erfindungsgemäßen Harze umfassend die Kondensation von Aldehyden und Ketonen, wobei die Ketone mit den Aldehyden in einem molaren Verhältnis von 1 : 1,4 bis 1 : 2,5 umgesetzt werden.

Zur Harzsynthese können alle bekannten Verfahren Anwendung finden. Üblicherweise wird in Gegenwart alkalischer Katalysatoren bei Temperaturen zwischen 75 und 95 °C kondensiert. Solche Umsetzungen sind z. B. in Ullmann's Encyclopädie der technischen Chemie Bd. 12, Verlag Chemie Weinheim, 1976, Seiten 547 bis 555 beschrieben.

Die Umsetzung in Verfahren gemäß der vorliegenden Erfindung wird vorzugsweise in einem basischen Milieu durchgeführt. Als Katalysatoren für die Polykondensation werden insbesondere stark basische Verbindungen verwendet. Bevorzugt einsetzbare basische Katalysatoren sind z. B. Alkalihydroxide und Alkalimethylate, wie z. B. Kaliumhydroxid, Natriumhydroxid, Kaliummethylat oder Natriummethylat. Weitere bevorzugt einsetzbare basische Katalysatoren sind quaternäre Ammoniumverbindungen wie Tetramethylammoniumhydroxid, Tetraethylammoniumhydroxid oder Tetrabutylammoniumhydroxid.

Die basischen Katalysatoren werden insbesondere in Mengen von ≥ 0,025 Mol-%, vorzugsweise ≥ 0,05 Mol-% und insbesondere in Mengen von ≥ 0,10 Mol-%, bezogen auf das Keton, in der Reaktionsmischung eingesetzt.

In einer weiteren bevorzugten Ausführungsform der vorliegenden Erfindung wird bei den erfindungsgemäßen Verfahren ein Phasentransferkatalysator der allgemeinen Formel 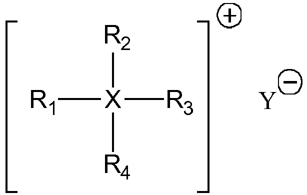 eingesetzt, wobei X ein Stickstoff- oder Phosphoratom ist, R1 ein Phenyl- oder ein Benzylrest ist, R2, R3, R4 gleich oder verschieden und ausgewählt aus Alkylresten mit 1 bis 22 C-Atomen in der Kohlenstoffkette, ein Phenyl- oder Benzylreste sein können und Y das Anion einer anorganischen oder organischen Säure oder ein Hydroxidion bedeutet.

Für den Fall quaternärer Ammoniumsalze sind R2, R3, R4 insbesondere Alkylreste mit 1 bis 22 C-Atomen, insbesondere solche mit 1 bis 12 C-Atomen, in der Kohlenstoffkette und/oder Phenyl- und/oder Benzylreste bevorzugt. Beispiele quaternärer Ammoniumsalze sind, Cetyldimethylbenzylammoniumchlorid, Tributylbenzylammoniumchlorid, Trimethylbenzylammoniumchlorid, Trimethylbenzylamminiumjodid, Triethylbenzylammoniumchlorid oder Triethylbenzylammoniumjodid. Als quaternäre Phosphoniumsalze kommen z. B. Triphenylbenzylphosphoniumchlorid oder Triphenylbenzylphosphoniumjodid in Frage. Vorzugsweise wird Benzyltributylammoniumchlorid eingesetzt. Für quaternäre Phosphoniumsalze sind R2, R3, R4 vorzugsweise Alkylreste mit 1 bis 22 C-Atomen und/oder Phenylreste und/oder Benzylreste. Als Anionen kommen solche starker anorganischer oder organischer Säuren in Frage, insbesondere Cl-, Br-, J-Anionen aber auch Hydroxide, Methoxide oder Acetate.

Der Phasentransferkatalysator wird vorzugsweise in Mengen von 0,01 bis 15 Massen-%, vorzugsweise von 0,1 bis 10,0 Massen-% und insbesondere in Mengen von 0,1 bis 5,0 Massen-%, bezogen auf das eingesetzte Keton, in den erfindungsgemäßen Verfahren eingesetzt.

Die Umsetzung findet in einem Hilfslösemittel statt. Als geeignete Lösemittel haben sich beispielsweise Methanol oder Ethanol erwiesen. Es ist jedoch auch möglich, Hilfslösemittel zu verwenden, die sich während der Reaktion ebenfalls umsetzen lassen. Ein Beispiel hierfür ist Methylethylketon. Besonders bevorzugt erfolgt die Kondensation gemäß der vorliegenden Erfindung in Gegenwart von Methanol und/oder Ethanol.

Die Umsetzung findet bei Temperaturen zwischen 40 °C und 120 °C statt, besonders bevorzugt zwischen 40 °C und 78 °C.

Die Umsetzung wird bei Drücken zwischen 1,01325 bar absolut und 1,8 bar absolut, bevorzugt bei 1,01325 bar absolut durchgeführt.

Durch Variation der Mengenverhältnisse von Aldehyd und Keton innerhalb der Grenzen der vorliegenden Erfindung lassen sich Harzeigenschaften wie Glasübergangstemperatur und Molgewicht einstellen.

In einer besonders bevorzugten Ausführungsform der vorliegenden Erfindung wird als Aldehydkomponente 30%ige wässrige Formaldehydlösung und als Ketonkomponente 2-Methylpentan-4-on verwendet. Das bevorzugte molare Verhältnis von Keton zu Aldehyd beträgt 1 : 1,7 bis 1 : 2,2. In der bevorzugten Ausführungsform wird als Phasentransferkatalysator Benzyltributylammoniumchlorid eingesetzt. Das bevorzugte molare Verhältnis von Benzyltributylammoniumchlorid zu 2-Methylpentan-4-on beträgt 0,1 bis 0,5 Massen-%. Als basischer Katalysator wird bevorzugt Natronlauge als 50%ige Lösung w/w in einer bevorzugten Menge größer 0,15 Mol-%, bezogen auf 2-Methylpentan-4-on, eingesetzt. Die Kondensation findet bevorzugt in Methanol als Hilfslösemittel statt, wobei das Hilfslösemittel bevorzugt in einer Menge von mehr als 50 ml/mol 2-Methylpentan-4-on eingesetzt wird. Das erfindungsgemäße Produkt kann auf fachmännische Art und Weise durch Destillation, Separation und/oder Waschungen aufgearbeitet werden.

Da die erfindungsgemäßen Kondensationsharze bei 23 °C und 101325 Pa fließfähig sind, eignen sie sich in vorteilhafter Weise für verschiedene Anwendungen. Insbesondere eignen sich die erfindungsgemäßen Kondensationsharze als Anreibeharze für die Herstellung von lösemittelarmen Feststoffanreibungen.

Somit ist ein weiterer Gegenstand der vorliegenden Erfindung die Verwendung der erfindungsgemäßen Harze als Pigmentnetz- und/oder Dispergierharze, wobei es sich insbesondere um lösemittelhaltige Pigmentpasten handelt. Somit eignen sich die erfindungsgemäßen Harze als Anreibeharze für lösemittelarme Feststoffanreibungen, beispielsweise auf Basis von Füllstoffen oder Pigmenten.

Zusammensetzungen enthaltend Harze gemäß der vorliegenden Erfindung gehören ebenfalls zum Gegenstand der vorliegenden Erfindung. Insbesondere enthalten die erfindungsgemäßen Zusammensetzungen zusätzlich Pigmente. In ein besonders bevorzugten Ausführungsform bestehen die Zusammensetzungen aus Harzen gemäß der vorliegenden Erfindung und Pigmenten.

Bevorzugte Feststoffe sind Füllstoffe, wie zum Beispiel Talk, Kaolin, Kieselsäuren, Baryte und Kalk; keramische Materialien, wie zum Beispiel Aluminiumoxide, Silikate, Zirkonoxide, Titanoxide, Bornitride, Siliziumnitride, Borcarbide, gemischte Silizium-Aluminiumnitride und Metall-Titanate; magnetische Materialien, wie zum Beispiel magnetische Oxide von Übergangsmetallen, wie Eisenoxide, Kobalt dotierte Eisenoxide und Ferrite; Metalle, wie zum Beispiel Eisen, Nickel, Kobalt und deren Legierungen und Biozid, Agrochemikalien und Pharmaka, wie zum Beispiel Fungizide.

Weitere bevorzugte Feststoffe sind anorganische und organische Pigmente. Beispiele für anorganische Pigmente sind Ruße, Titandioxide, Zinkoxide, Preußischblau, Eisenoxide, Cadmiumsulfide, Chrompigmente, wie zum Bei-spiel Chromate, Molybdate und gemischte Chromate und Sulfate des Bleis, Zink, Barium, Calcium und deren Mischungen. Weitere Beispiele für anorganische Pigmente werden in dem Buch "H. Endriss, Aktuelle anorganische Bunt-Pigmente, Vincentz Verlag, Hannover (1997)" genannt. Beispiele für organische Pigmente sind solche aus der Gruppe der Azo-, Diazo-, kondensierten Azo-, Naphtol-, Metallkomplex-, Thioindigo-, Indanthron-, Isoindanthron-, Anthanthron-, Anthrachinon-, Isodibenzanthron-, Triphendioxazin-, Chi-nacridon-, Perylen-, Diketopyrrolopyrrol und Phtalocyaninpigmente. Weitere Beispiele für organische Pigmente werden in dem Buch "W. Herbst, K. Hunger, Industrial Organic Pigments, VCH, Weinheim (1993)" genannt.

Es hat sich gezeigt, dass eine universelle Verträglichkeit der erfindungsgemäßen Harze mit weiteren Bestandteilen, bevorzugt Bindemitteln, von Beschichtungsstoffen und/oder Klebstoffen und/oder Dichtmassen besteht. Als Beschichtungsstoffe, in denen die erfindungsgemäßen Pigmentpräparationen bevorzugt eingebracht werden können, kommen alle dem Fachmann bekannten lösemittelhaltigen und lösemittelfreien Systeme in Betracht. Diese Systeme können beispielsweise physikalisch trocknend, oxidativ trocknend oder anderweitig reaktiv in 1K- oder 2K-Lacken sein.

Beispiele für verträgliche Bindemittel sind lang-, mittel- und kurzölige Alkyde, selbstvernetzende und 2-Komponenten Acrylate, Polyester-Melamin-Systeme und 2-Komponenten Epoxide. Die mit dem erfindungsgemäßen Anreibeharz hergestellten Beschichtungssysteme zeichnen sich durch eine hohe Vergilbungs-, Chemikalien-und Korrosionsbeständigkeit, hohe Filmhärten und guten Glanz aus.

Somit ist die Verwendung von Zusammensetzungen gemäß der vorliegenden Erfindung zur Herstellung von lösemitthaltigen Lacken und Druckfarben oder Drucklacken und Beschichtungsstoffen ebenfalls Gegenstand der vorliegenden Erfindung.

Die vorab beschriebenen Messmethoden gelten für alle Ausführungsformen der vorliegenden Erfindung. Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

### Beispiele

### Beispiel 1 - Kondensationsharz aus Formaldehyd und 5-Methylhexan-2-on

571,0 g 5-Methylhexan-2-on, 235,8 g p-Formaldehyd (95,5%ig), 500 ml Methanol und 1,43 g Benzyltributylammoniumchlorid werden in einem Dreihalskolben mit Rührer, Rückflusskühler und Thermofühler in Stickstoffatmosphäre vorgelegt. Nach Erwärmen auf 40 °C wird die Reaktion durch Zugabe von 100,0 g Natronlauge (50 Gew.-%) gestartet. Anschließend wird die Reaktionsmischung in 2 Stunden bis zum Rückfluss aufgeheizt. Nach Erreichen des Rückflusses werden 249,4 g einer Formaldehydlösung (30 Gew.-% in Wasser) innerhalb von 75 Minuten hinzugegeben, danach wird die Reaktionsmischung 4 Stunden unter Rückfluss gehalten. Dann wird der Rührer abgeschaltet. Nach Separation der Phasen wird die überstehende wässrige Methanolphase abgetrennt und das verbleibende Wasser / Methanol-Gemisch destilliert. Das Rohprodukt wird fünfmal mit Wasser gewaschen. Abschließend wird bis 180 °C im Wasserstrahlvakuum destilliert.
Mn = 590 g/mol
Mw = 790 g/mol
Glasübergangstemperatur -10 °C
Viskosität (93 Gew.-% in Butylacetat) bei 23 °C: 31 Pas

### Beispiel 2 - Kondensationsharz aus Formaldehyd und Heptan-2-on

571,0 g Heptan-2-on, 235,8 g p-Formaldehyd (95,5 % ig), 250 ml Methanol und 1,43 g Benzyltributylammoniumchlorid werden in einem Dreihalskolben mit Rührer, Rückflusskühler und Thermofühler in Stickstoffatmosphäre vorgelegt. Nach Erwärmen auf 40 °C wird die Reaktion durch Zugabe von 100,0 g Natronlauge (50 Gew.-%) gestartet. Anschließend wird die Reaktionsmischung in 2 Stunden bis zum Rückfluss aufgeheizt. Nach Erreichen des Rückflusses werden 249,4 g einer Formaldehydlösung (30 Gew.-% in Wasser) innerhalb von 60 Minuten hinzugegeben, danach wird die Reaktionsmischung 4 Stunden unter Rückfluss gehalten. Dann wird der Rührer abgeschaltet. Nach Separation der Phasen wird die überstehende wässrige Methanolphase abgetrennt und das verbleibende Wasser / Methanol-Gemisch destilliert. Das Rohprodukt wird fünfmal mit Wasser gewaschen. Abschließend wird bis 180 °C im Wasserstrahlvakuum destilliert.
Mn = 650 g/mol
Mw = 920 g/mol
Glasübergangstemperatur -22 °C
Viskosität (93 Gew.-% in Butylacetat) bei 23 °C: 25 Pas

### Beispiel 3 - Kondensationsharz aus Formaldehyd und Undecan-2-on

681,2 g Undecan-2-on, 188,7 g p-Formaldehyd (95,5%ig), 400 ml Methanol und 1,70 g Benzyltributylammoniumchlorid werden in einem Dreihalskolben mit Rührer, Rückflusskühler und Thermofühler in Stickstoffatmosphäre vorgelegt. Nach Erwärmen auf 40 °C wird die Reaktion durch Zugabe von 80,0 g Natronlauge (50 Gew.-%) gestartet. Anschließend wird die Reaktionsmischung in 2 Stunden bis zum Rückfluss aufgeheizt. Nach Erreichen des Rückflusses werden 249,4 g einer Formaldehydlösung (30 Gew.-% in Wasser) innerhalb von 60 Minuten hinzugegeben, danach wird die Reaktionsmischung 4 Stunden unter Rückfluss gehalten. Dann wird der Rührer abgeschaltet. Nach Separation der Phasen wird die überstehende wässrige Methanolphase abgetrennt und das verbleibende Wasser / Methanol-Gemisch destilliert. Das Rohprodukt wird fünfmal mit Wasser gewaschen. Abschließend wird bis 180 °C im Wasserstrahlvakuum destilliert.
Mn = 720 g/mol
Mw = 920 g/mol
Glasübergangstemperatur -73 °C
Viskosität (93 Gew.-% in Butylacetat) bei 23 °C: 5 Pas

### Beispiel 4 - Kondensationsharz aus Formaldehyd und Oktan-2-on

576,9 g Oktan-2-on, 212,3 g p-Formaldehyd (95,5%ig), 450 ml Methanol 1,44 g Benzyltributylammoniumchlorid werden in einem Dreihalskolben mit Rührer, Rückflusskühler und Thermofühler in Stickstoffatmosphäre vorgelegt. Nach Erwärmen auf 40 °C wird die Reaktion durch Zugabe von 90,0 g Natronlauge (50 Gew.-%) gestartet. Anschließend wird die Reaktionsmischung in 2 Stunden bis zum Rückfluss aufgeheizt. Nach Erreichen des Rückflusses werden 224,5 g einer Formaldehydlösung (30 Gew.-% in Wasser) innerhalb von 60 Minuten hinzugegeben, danach wird die Reaktionsmischung 4 Stunden unter Rückfluss gehalten. Dann wird der Rührer abgeschaltet. Nach Separation der Phasen wird die überstehende wässrige Methanolphase abgetrennt und das verbleibende Wasser / Methanol-Gemisch destilliert. Das Rohprodukt wird fünfmal mit Wasser gewaschen. Abschließend wird bis 180 °C im Wasserstrahlvakuum destilliert.
Mn = 670 g/mol
Mw = 890 g/mol
Glasübergangstemperatur -38 °C
Viskosität (93 Gew.-% in Butylacetat) bei 23 °C: 12 Pas

### Beispiel 5 - Kondensationsharz aus Formaldehyd und 2-Methylpentan-4-on

1001,6 g 2-Methylpentan-4-on, 991,0 g Formaldehydlösung (30 Gew.-% in Wasser), 1000 ml Methanol und 2,5 g Benzyltributylammoniumchlorid werden in einem Dreihalskolben mit Rührer, Rückflusskühler und Thermofühler in Stickstoffatmosphäre vorgelegt. Nach Erwärmen auf 40 °C wird die Reaktion durch Zugabe von 200,0 g Natronlauge (50 Gew.-%) gestartet. Anschließend wird die Reaktionsmischung bis zum Rückfluss aufgeheizt. Nach Erreichen des Rückflusses werden 991,0 g einer Formaldehydlösung (30 Gew.-% in Wasser) innerhalb von 90 Minuten hinzugegeben, danach wird die Reaktionsmischung 5 Stunden unter Rückfluss gehalten. Dann wird der Rührer abgeschaltet. Nach Separation der Phasen wird die überstehende wässrige Methanolphase abgetrennt und das verbleibende Wasser / Methanol-Gemisch destilliert. Das Rohprodukt wird fünfmal mit Wasser gewaschen, wobei dem ersten Waschwasser 12 ml Eisessig zugefügt werden. Abschließend wird bis 180 °C im Wasserstrahlvakuum destilliert.
Mn = 490 g/mol
Mw = 640 g/mol
Glasübergangstemperatur -15 °C
Viskosität (93 Gew.-% in Butylacetat) bei 23 °C: 26 Pas

### Beispiel 6 - Kondensationsharz aus Acetaldehyd und 2-Methylpentan-4-on

1001,6 g 2-Methylpentan-4-on, 440,1 g Acetaldehyd, 1000 ml Methanol und 2,5 g Benzyltributylammoniumchlorid werden in einem Dreihalskolben mit Rührer, Rückflusskühler und Thermofühler in Stickstoffatmosphäre vorgelegt. Nach Erwärmen auf 40 °C wird die Reaktion durch Zugabe von 200,0 g Natronlauge (50 Gew.-%) gestartet. Anschließend wird die Reaktionsmischung bis zum Rückfluss aufgeheizt. Nach Erreichen des Rückflusses werden 440,1 g Acetaldehyd innerhalb von 90 Minuten hinzugegeben, danach wird die Reaktionsmischung 5 Stunden unter Rückfluss gehalten. Dann wird der Rührer abgeschaltet. Nach Separation der Phasen wird die überstehende wässrige Methanolphase abgetrennt und das verbleibende Wasser / Methanol-Gemisch destilliert. Das Rohprodukt wird fünfmal mit Wasser gewaschen, wobei dem ersten Waschwasser 12 ml Eisessig zugefügt werden. Abschließend wird bis 180 °C im Wasserstrahlvakuum destilliert.
Mn = 490 g/mol
Mw = 720 g/mol
Glasübergangstemperatur -10 °C
Viskosität (93 Gew.-% in Butylacetat) bei 23 °C: 35 Pas

### Beispiel 7 - Kondensationsharz aus 2-Methylpropanal und 2-Methylpentan-4-on

1001,6 g 2-Methylpentan-4-on, 721,1 g 2-Methylpropanal, 1000 ml Methanol und 2,5 g Benzyltributylammoniumchlorid werden in einem Dreihalskolben mit Rührer, Rückflusskühler und Thermofühler in Stickstoffatmosphäre vorgelegt. Nach Erwärmen auf 40 °C wird die Reaktion durch Zugabe von 200,0 g Natronlauge (50 Gew.-%) gestartet. Anschließend wird die Reaktionsmischung bis zum Rückfluss aufgeheizt. Nach Erreichen des Rückflusses werden 721,1 g 2-Methylpropanal innerhalb von 90 Minuten hinzugegeben, danach wird die Reaktionsmischung 5 Stunden unter Rückfluss gehalten. Dann wird der Rührer abgeschaltet. Nach Separation der Phasen wird die überstehende wässrige Methanolphase abgetrennt und das verbleibende Wasser / Methanol-Gemisch destilliert. Das Rohprodukt wird fünfmal mit Wasser gewaschen, wobei dem ersten Waschwasser 12 ml Eisessig zugefügt werden. Abschließend wird bis 180 °C im Wasserstrahlvakuum destilliert.
Mn = 470 g/mol
Mw = 680 g/mol
Glasübergangstemperatur -19 °C
Viskosität (93 Gew.-% in Butylacetat) bei 23 °C: 29 Pas

### Beispiel 8 - Kondensationsharz aus Butanal und 2-Methylpentan-4-on

1001,6 g 2-Methylpentan-4-on, 721,1 g Butanal, 1000 ml Methanol und 2,5 g Benzyltributylammoniumchlorid werden in einem Dreihalskolben mit Rührer, Rückflusskühler und Thermofühler in Stickstoffatmosphäre vorgelegt. Nach Erwärmen auf 40 °C wird die Reaktion durch Zugabe von 200,0 g Natronlauge (50 Gew.-%) gestartet. Anschließend wird die Reaktionsmischung bis zum Rückfluss aufgeheizt. Nach Erreichen des Rückflusses werden 721,1 g Butanal innerhalb von 90 Minuten hinzugegeben, danach wird die Reaktionsmischung 5 Stunden unter Rückfluss gehalten. Dann wird der Rührer abgeschaltet. Nach Separation der Phasen wird die überstehende wässrige Methanolphase abgetrennt und das verbleibende Wasser / Methanol-Gemisch destilliert. Das Rohprodukt wird fünfmal mit Wasser gewaschen, wobei dem ersten Waschwasser 12 ml Eisessig zugefügt werden. Abschließend wird bis 180 °C im Wasserstrahlvakuum destilliert.
Mn = 460 g/mol
Mw = 640 g/mol
Glasübergangstemperatur -24 °C
Viskosität (93 Gew.-% in Butylacetat) bei 23 °C: 23 Pas

### Beispiel 9 - Kondensationsharz aus Dodecanal und 2-Methylpentan-4-on

1001,6 g 2-Methylpentan-4-on, 1843,2 g Dodecanal, 1000 ml Methanol und 2,5 g Benzyltributylammoniumchlorid werden in einem Dreihalskolben mit Rührer, Rückflusskühler und Thermofühler in Stickstoffatmosphäre vorgelegt. Nach Erwärmen auf 40 °C wird die Reaktion durch Zugabe von 200,0 g Natronlauge (50 Gew.-%) gestartet. Anschließend wird die Reaktionsmischung bis zum Rückfluss aufgeheizt. Nach Erreichen des Rückflusses werden 1843,2 g Dodecanal innerhalb von 90 Minuten hinzugegeben, danach wird die Reaktionsmischung 5 Stunden unter Rückfluss gehalten. Dann wird der Rührer abgeschaltet. Nach Separation der Phasen wird die überstehende wässrige Methanolphase abgetrennt und das verbleibende Wasser / Methanol-Gemisch destilliert. Das Rohprodukt wird fünfmal mit Wasser gewaschen, wobei dem ersten Waschwasser 12 ml Eisessig zugefügt werden. Abschließend wird bis 180 °C im Wasserstrahlvakuum destilliert.
Mn = 380 g/mol
Mw = 520 g/mol
Glasübergangstemperatur -5 °C
Viskosität (93 Gew.-% in Butylacetat) bei 23 °C: 42 Pas

### Beispiel 10 - Kondensationsharz aus Formaldehyd und Heptan-4-on

1141,9 g Heptan-4-on, 991,0 g Formaldehydlösung (30 Gew.-% in Wasser), 1000 ml Methanol und 2,5 g Benzyltributylammoniumchlorid werden in einem Dreihalskolben mit Rührer, Rückflusskühler und Thermofühler in Stickstoffatmosphäre vorgelegt. Nach Erwärmen auf 40 °C wird die Reaktion durch Zugabe von 200,0 g Natronlauge (50 Gew.-%) gestartet. Anschließend wird die Reaktionsmischung bis zum Rückfluss aufgeheizt. Nach Erreichen des Rückflusses werden 991,0 g einer Formaldehydlösung (30 Gew.-% in Wasser) innerhalb von 90 Minuten hinzugegeben, danach wird die Reaktionsmischung 5 Stunden unter Rückfluss gehalten. Dann wird der Rührer abgeschaltet. Nach Separation der Phasen wird die überstehende wässrige Methanolphase abgetrennt und das verbleibende Wasser / Methanol-Gemisch destilliert. Das Rohprodukt wird fünfmal mit Wasser gewaschen, wobei dem ersten Waschwasser 12 ml Eisessig zugefügt werden. Abschließend wird bis 180 °C im Wasserstrahlvakuum destilliert.
Mn = 640 g/mol
Mw = 900 g/mol
Glasübergangstemperatur -23 °C
Viskosität (93 Gew.-% in Butylacetat) bei 23 °C: 26 Pas

### Beispiel 11 - Kondensationsharz aus Formaldehyd und Oktan-3-on

1282,1 g Oktan-3-on, 991,0 g Formaldehydlösung (30 Gew.-% in Wasser), 1000 ml Methanol und 2,5 g Benzyltributylammoniumchlorid werden in einem Dreihalskolben mit Rührer, Rückflusskühler und Thermofühler in Stickstoffatmosphäre vorgelegt. Nach Erwärmen auf 40 °C wird die Reaktion durch Zugabe von 90,0 g Natronlauge (50 Gew.-%) gestartet. Anschließend wird die Reaktionsmischung in 2 Stunden bis zum Rückfluss aufgeheizt. Nach Erreichen des Rückflusses werden 991,0 g einer Formaldehydlösung (30 Gew.-% in Wasser) innerhalb von 60 Minuten hinzugegeben, danach wird die Reaktionsmischung 4 Stunden unter Rückfluss gehalten. Dann wird der Rührer abgeschaltet. Nach Separation der Phasen wird die überstehende wässrige Methanolphase abgetrennt und das verbleibende Wasser / Methanol-Gemisch destilliert. Das Rohprodukt wird fünfmal mit Wasser gewaschen. Abschließend wird bis 180 °C im Wasserstrahlvakuum destilliert.
Mn = 690 g/mol
Mw = 920 g/mol
Glasübergangstemperatur -39 °C
Viskosität (93 Gew.-% in Butylacetat) bei 23 °C: 10 Pas

### Beispiel 12 - Kondensationsharz aus Formaldehyd und Heptan-3-on

1141,9 g Heptan-3-on, 991,0 g Formaldehydlösung (30 Gew.-% in Wasser), 1000 ml Methanol und 2,5 g Benzyltributylammoniumchlorid werden in einem Dreihalskolben mit Rührer, Rückflusskühler und Thermofühler in Stickstoffatmosphäre vorgelegt. Nach Erwärmen auf 40 °C wird die Reaktion durch Zugabe von 100,0 g Natronlauge (50 Gew.-%) gestartet. Anschließend wird die Reaktionsmischung in 2 Stunden bis zum Rückfluss aufgeheizt. Nach Erreichen des Rückflusses werden 249,4 g einer Formaldehydlösung (30 Gew.-% in Wasser) innerhalb von 60 Minuten hinzugegeben, danach wird die Reaktionsmischung 4 Stunden unter Rückfluss gehalten. Dann wird der Rührer abgeschaltet. Nach Separation der Phasen wird die überstehende wässrige Methanolphase abgetrennt und das verbleibende Wasser / Methanol-Gemisch destilliert. Das Rohprodukt wird fünfmal mit Wasser gewaschen. Abschließend wird bis 180 °C im Wasserstrahlvakuum destilliert.
Mn = 650 g/mol
Mw = 920 g/mol
Glasübergangstemperatur -24 °C
Viskosität (93 Gew.-% in Butylacetat) bei 23 °C: 22 Pas

### Beispiel 13 - Kondensationsharz aus Formaldehyd, 2-Methylpentan-4-on und Methylethylketon

408,8 g 2-Methylpentan-4-on, 72,1 g Methylethylketon, 235,8 g p-Formaldehyd (95,5%ig), 500 ml Methanol und 1,20 g Benzyltributylammoniumchlorid werden in einem Dreihalskolben mit Rührer, Rückflusskühler und Thermofühler in Stickstoffatmosphäre vorgelegt. Nach Erwärmen auf 40 °C wird die Reaktion durch Zugabe von 20,0 g Natronlauge (50 Gew.-%) gestartet. Anschließend wird die Reaktionsmischung bis zum Rückfluss aufgeheizt. Nach Erreichen des Rückflusses werden 249,4 g einer Formaldehydlösung (30 Gew.-% in Wasser) innerhalb von 60 Minuten hinzugegeben, danach wird die Reaktionsmischung 4 Stunden unter Rückfluss gehalten. Dann wird der Rührer abgeschaltet. Nach Separation der Phasen wird die überstehende wässrige Methanolphase abgetrennt und das verbleibende Wasser / Methanol-Gemisch destilliert. Das Rohprodukt wird fünfmal mit Wasser gewaschen. Abschließend wird bis 180 °C im Wasserstrahlvakuum destilliert.
Mn = 540 g/mol
Mw = 710 g/mol
Glasübergangstemperatur -1 °C
Viskosität (93 Gew.-% in Butylacetat) bei 23 °C: 50 Pas

### Beispiel 14 - Kondensationsharz aus Formaldehyd und 2-Methylpentan-4-on

1001,6 g 2-Methylpentan-4-on, 991,0 g Formaldehydlösung (30 Gew.-% in Wasser), 1000 ml Ethanol und 2,5 g Benzyltributylammoniumchlorid werden in einem Dreihalskolben mit Rührer, Rückflusskühler und Thermofühler in Stickstoffatmosphäre vorgelegt. Nach Erwärmen auf 40 °C wird die Reaktion durch Zugabe von 200,0 g Natronlauge (50 Gew.-%) gestartet. Anschließend wird die Reaktionsmischung bis zum Rückfluss aufgeheizt. Nach Erreichen des Rückflusses werden 991,0 g einer Formaldehydlösung (30 Gew.-% in Wasser) innerhalb von 90 Minuten hinzugegeben, danach wird die Reaktionsmischung 5 Stunden unter Rückfluss gehalten. Dann wird der Rührer abgeschaltet. Nach Separation der Phasen wird die überstehende wässrige Ethanolphase abgetrennt und das verbleibende Wasser / Ethanol-Gemisch destilliert. Das Rohprodukt wird fünfmal mit Wasser gewaschen, wobei dem ersten Waschwasser 12 ml Eisessig zugefügt werden. Abschließend wird bis 180 °C im Wasserstrahlvakuum destilliert.
Mn = 480 g/mol
Mw = 620 g/mol
Glasübergangstemperatur -13 °C
Viskosität (93 Gew.-% in Butylacetat) bei 23 °C: 27 Pas

### Nichterfindungsgemäßes Beispiel 1 - Kondensationsharz aus Formaldehyd und Cyclohexanon

981,5 g Cyclohexanon, 220,1 g p-Formaldehyd (95,5%ig), und 1250 ml Methanol werden in einem Dreihalskolben mit Rührer, Rückflusskühler und Thermofühler in Stickstoffatmosphäre vorgelegt. Nach Erwärmen auf 40 °C wird die Reaktion durch Zugabe von 80,0 g Natronlauge (50 Gew.-%) gestartet. Anschließend wird die Reaktionsmischung in 2 Stunden bis zum Rückfluss aufgeheizt. Nach Erreichen des Rückflusses werden 700,7 g einer Formaldehydlösung (30 Gew.-% in Wasser) innerhalb von 60 Minuten hinzugegeben, danach wird die Reaktionsmischung 4 Stunden unter Rückfluss gehalten. Dann wird der Rührer abgeschaltet. Nach Separation der Phasen wird die überstehende wässrige Methanolphase abgetrennt und das verbleibende Wasser / Methanol-Gemisch destilliert. Das Rohprodukt wird fünfmal mit Wasser gewaschen. Abschließend wird bis 180 °C im Wasserstrahlvakuum destilliert.
Mn = 580 g/mol
Mw = 1000 g/mol
Glasübergangstemperatur 85 °C
Viskosität (93 Gew.-% in Butylacetat) bei 23 °C: fest

### Nichterfindungsgemäßes Beispiel 2 - Kondensationsharz aus Formaldehyd und Methylisobutylketon

1001,6 g Methylisobutylketon, 408,8 g p-Formaldehyd (95,5%ig), 1250 ml Methanol und 5,0 g Benzyltributylammoniumchlorid werden in einem Dreihalskolben mit Rührer, Rückflusskühler und Thermofühler in Stickstoffatmosphäre vorgelegt. Nach Erwärmen auf 40 °C wird die Reaktion durch Zugabe von 80,0 g Natronlauge (50 Gew.-%) gestartet. Anschließend wird die Reaktionsmischung in 2 Stunden bis zum Rückfluss aufgeheizt. Nach Erreichen des Rückflusses werden 1251,3 g einer Formaldehydlösung (30 Gew.-% in Wasser) innerhalb von 60 Minuten hinzugegeben, danach wird die Reaktionsmischung 4 Stunden unter Rückfluss gehalten. Dann wird der Rührer abgeschaltet. Nach Separation der Phasen wird die überstehende wässrige Methanolphase abgetrennt und das verbleibende Wasser / Methanol-Gemisch destilliert. Das Rohprodukt wird fünfmal mit Wasser gewaschen. Abschließend wird bis 180 °C im Wasserstrahlvakuum destilliert.
Mn = 650 g/mol
Mw = 830 g/mol
Glasübergangstemperatur 48 °C
Viskosität (93 Gew.-% in Butylacetat) bei 23 °C: fest

### Anwendungstechnische Eigenschaften der Anreibeharze Filmhärte

Die Bewertung der resultierenden Filmhärte bei Einsatz der Anreibeharze erfolgt in einem Zwei-Komponenten-Lacksystem. Zur Herstellung dieses Prüfsystems mischt man 65,2 g Setalux® A HS 1170 BA (70%ig in Butylacetat, Polyol der Fa. Nuplex) mit 1,8 g TIB KAT® 716 (1%ig in Butylacetat, Katalysator der Fa. TIB Chemicals AG), 3,0 g Xylol, 3,0 g Methoxypropylacetat, 3,0 g Butylacetat und 0,1 g TEGO® Flow 425 (Oberfächenadditiv der Fa. Evonik Industries AG). Als Härter wird kurz vor Applikation 23,9 g Desmodur® N 3390 BA (Isocyanat-Härter der Fa. Bayer® Material Science AG) zugegeben und gut eingerührt.

Zur Prüfung der Filmhärte werden alle Anreibeharze 80%ig in Butylacetat vorgelöst. Dann mischt man 13,32 g Stammlack mit 2,50 g Harzlösung, fügt 4,18 g Härter hinzu und mischt erneut. Die Proben werden mit einem 150 µm Kastenrakel auf eine Glasplatte appliziert und 24 Stunden bei Raumtemperatur sowie anschließend 2 Stunden in einem Ofen bei 80 °C getrocknet.

Die Härte der Lackfilme wird nach DIN 53 157 mit einem Pendeldämpfungs-Prüfgerät Modell 299/300 der Fa. Erichsen bestimmt.

### Vergilbungsverhalten

Das Vergilbungsverhalten der Anreibeharze wird in einem Einbrennlacksystem geprüft.

Zur Herstellung der weißen Grundierung werden 35,0 g Dynapol LH 832-02, 65%ig in Solvesso 150/ BG, 0,2 g Aerosil 200, 30,0 g Titandioxid 2310 (Fa. Kronos), 5,0 g Solvesso 200 und 4,8 g Butyldiglycol mit 150 g Glasperlen (Durchmesser 3 mm) in eine Pulverglasflasche gegeben und für 45 Minuten mittels eines Dispersers DAS H 200-K der Fa. Lau dispergiert.

Danach werden 8,0 g Dynapol LH 832-02, 65%ig in Solvesso 150/ BG, 6,0 g Cymel 303 (Melaminharz der Fa. Cytec), 1,0 g Nacure 1419 (Katalysator der Fa. Worlee Chemie), 1,0 g Resiflow FL 2 (Oberflächenadditiv der Fa. Worlee Chemie) und 9,0 g Butylglykol zugegeben, Die Mischung wird erneut für 5 Minuten mittels Disperser DAS H 200-K der Fa. Lau homogenisiert.

Diese Grundierung wird mit einem 150 µm Kastenrakel auf Gardobond-Prüfsubstrate 722 W OF der Fa. Chemetall appliziert und 10 Minuten bei Raumtemperatur sowie anschließend 40 Minuten einem Ofen bei 150 °C getrocknet.

Zur Herstellung des Klarlacks werden 60,5 g Setal 1603 BA-78, 76%ig (Polyol der Fa. Nuplex), 16,5 g Maprenal MF 927, 70%ig in Isobutanol (Melaminharz der Fa. Ineos Melamines), 11,5 g Xylol und 11,5 g Butylacetat gut vermischt.

Zu 50,0 g dieses Prüflacks gibt man je 2,9 g der Dispergierharze (falls diese 100%ig vorliegen oder eine größere Menge mit entsprechenden Harz-Feststoffgehalt, falls diese gelöst vorliegen) und homogenisiert gründlich.

Die Proben werden mit einem 150 µm Kastenrakel auf die weiß grundierten Gardobond-Prüfsubstrate 722 W OF der Fa. Chemetall appliziert und 10 Minuten bei Raumtemperatur sowie anschließend 30 Minuten einem Ofen bei 180°C getrocknet. Die Proben werden mittels eines Spektralphotometers SP 60 der Fa. X-Rite farbmetrisch charakterisiert, danach nochmals für 60 Minuten bei 180 °C im Ofen belastet und nach Abkühlen erneut farbmetrisch charakterisiert.

### Verträglichkeit mit Lackbindemitteln

Zur Prüfung der Verträglichkeit werden verschiedene Lackbindemittel - hier WorléeKyd S 3001, 75%ig in Xylol / MOP 8 : 2 (Alkydharz der Fa. Worlée-Chemie), Alkydal F 681 TB, 75%ig in Testbenzin (Alkydharz der Fa. Nuplex), WorléeKyd SD 7003, 85%ig in entaromatisierter KW 160-200 (Alkydharz der Fa. Worlée-Chemie), Synthalat A 086 HS, 75%ig in Butylacetat (Acrylatharz der Fa. Synthopol), Viacryl SC 444/50 BSNB, 50%ig in Butanol , Solventnaphtha 180/210 (Acrylatharz der Fa. Cytec) sowie Dynapol LH 830-02, 60%ig in Solventnaphtha 150 / Butylglykol (Polyester der Fa. Evonik) zuerst mit Butylacetat / Methoxypropylacetat (im Verhältnis 1:1) auf einen Harzgehalt von 60 % verdünnt.

Dann gibt man zu 100,0 g dieser Harzlösungen je einmal 3,0 g und einmal 18,0 g der Dispergierharze (falls diese 100%ig vorliegen oder eine größere Menge mit entsprechenden Harz-Feststoffgehalt, falls diese gelöst vorliegen). Die Flüssigkeiten werden mittels Magnetrührer ohne Heizung 10 Minuten miteinander verrührt. Danach werden die Mischungen mit einem 200 µm Rahmenrakel auf Glasplatten aufgezogen und 2 Stunden bei 60 °C getrocknet. Nach Abkühlung auf Raumtemperatur wird der Aufzug auf der Glasplatte beurteilt. Die Mischung in der Glasflasche wird nach 24 Stunden beurteilt.

Die Beurteilung wird anhand des folgenden Schemas durchgeführt:
Klare Flüssigkeit, klarer Film => Beurteilung + (verträglich)
Trübe Flüssigkeit, trüber Film => Beurteilung - (unverträglich)

### Verhalten in Pigmentkonzentraten

Die Bewertung der anwendungstechnischen Eigenschaften der Anreibeharze erfolgt weiter in Pigmentkonzentraten mit den folgenden Rezepturen:
1) Pigmentkonzentrat auf Basis eines Eisenoxidgelb-Pigments (CI PY 42)
   In einem 250 ml Schraubdeckelglas werden 75,0 g Bayferrox 3920 (Fa. Bayer), 60 g der 93%igen Löseformen der Anreibeharze in Butylacetat, geeignete Dispergieradditive in einer Dosierung von 7 % Aktivsubstanz auf Pigment sowie Butylacetat in der bis zum Erreichen von 150,0 g erforderlichen Menge vorgelegt und mittels Laborspatel homogenisiert. Zu dieser Mischung gibt man 150,0 g Glasperlen (Durchmesser 2-2,3 mm), homogenisiert erneut und dispergiert für 1 Stunde in einem Farbmischgerät FAS 500 der Fa. Lau. Die erhaltenen Zubereitungen werden mittels Einmalfilter von den Glasperlen abgetrennt.
2) Pigmentkonzentrat auf Basis eines Phthalocyaninblau-Pigments (CI PB 15:3)
   In einem 250 ml Schraubdeckelglas werden 30,0 g Heliogen Blau L 7085 F (Fa BASF), 47,0 g der 93%igen Löseformen der Anreibeharze in Butylacetat, geeignete Dispergieradditive in einer Dosierung von 20 % Aktivsubstanz auf Pigment sowie Butylacetat in der bis zum Erreichen von 100,0 g erforderlichen Menge vorgelegt und mittels Laborspatel homogenisiert. Zu dieser Mischung gibt man 200 g Glasperlen (Durchmesser 2 - 2,3 mm), homogenisiert erneut und dispergiert für 2 Stunden in einem Farbmischgerät FAS 500 der Fa. Lau. Die erhaltenen Zubereitungen werden mittels Einmalfilter von den Glasperlen abgetrennt.
3) Pigmentkonzentrat auf Basis eines Ruß-Pigments (CI PB 7)
   In einem 250 ml Schraubdeckelglas werden 21,0 g Spezialschwarz 6, 52,0 g der 93%igen Löseformen der Anreibeharze in Butylacetat, geeignete Dispergieradditive in einer Dosierung von 40 % Aktivsubstanz auf Pigment sowie Butylacetat in der bis zum Erreichen von 100,0 g erforderlichen Menge vorgelegt und mittels Laborspatel homogenisiert. Zu dieser Mischung gibt man 200 g Glasperlen (Durchmesser 2 - 2,3 mm), homogenisiert erneut und dispergiert für 2 Stunden in einem Farbmischgerät FAS 500 der Fa. Lau. Die erhaltenen Zubereitungen werden mittels Einmalfilter von den Glasperlen abgetrennt.

Die erhaltenen Pigmentkonzentrate werden mit Hilfe eines Rheometers MCR 301 der Fa. Anton Paar rheologisch charakterisiert.

Mit den beschriebenen Dispergierharzen erhält man im Vergleich zu marktüblichen Vergleichsprodukten folgende Ergebnisse:

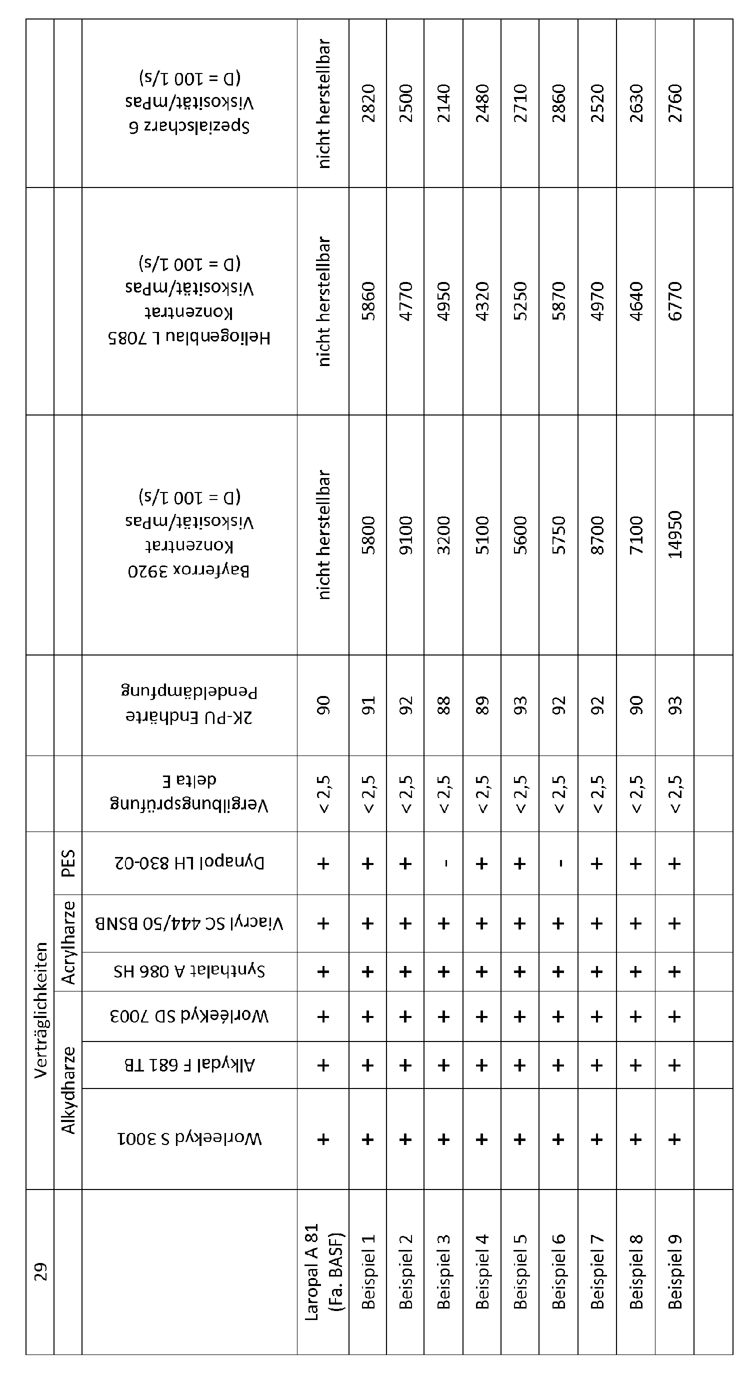

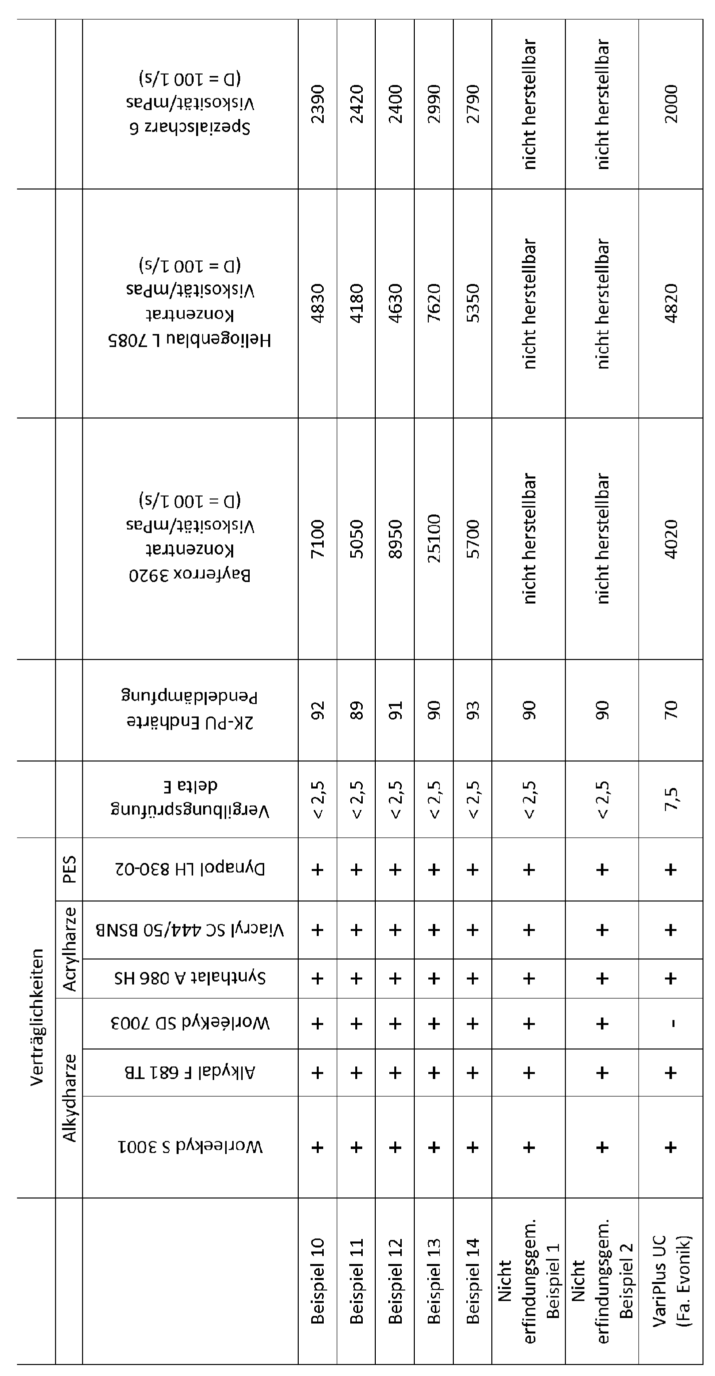

## Patentansprüche

1. Bei einer Temperatur von 23 °C und einem Druck von 101325 Pa fließfähige Harze auf Basis von aliphatischen Ketonen, ausgewählt aus der Gruppe bestehend aus Heptanon-2, Heptanon-3, Heptanon-4, Oktanon-2, Oktanon-3, Undecanon-2, 5-Methylhexan-2-on (Methylisoamylketon) oder 2-Methylpentan-4-on (Methylisobutylketon) oder Mischungen daraus und Aldehyden, ausgewählt aus der Gruppe bestehend aus Formaldehyd, Acetaldehyd, n-Butyraldehyd und/oder iso-Butyraldehyd, Amylaldehyd sowie Dodecanal oder Mischungen daraus, wobei das molare Keton-Aldehydverhältnis zwischen 1 : 1,5 und 1 : 2,5 liegt, mit relativen Molmassen Mn zwischen 350 und 900 g/mol, wobei die relativen Molmassen durch Größenausschlusschromatographie (SEC) bestimmt werden.

2. Harze gemäß Anspruch 1, **dadurch gekennzeichnet, dass** Formaldehyd als Aldehyd in den erfindungsgemäßen Harzen enthalten ist.

3. Harze gemäß Anspruch 1 oder2, **dadurch gekennzeichnet, dass** die Harze Glasübergangstemperaturen von 0 °C oder weniger aufweisen.

4. Verfahren zur Herstellung von Harzen gemäß Anspruch 1, umfassend die Kondensation von Aldehyden und Ketonen, wobei die Ketone mit den Aldehyden in einem molaren Verhältnis von 1 : 1,4 bis 1 : 2,5 umgesetzt werden.

5. Verfahren nach Anspruch 4, **dadurch gekennzeichnet, dass** die Kondensation in Gegenwart von Methanol und/oder Ethanol erfolgt.

6. Verwendung von Harzen gemäß einem oder mehreren der Ansprüche 1 bis 3 als Pigmentnetz- und/oder Dispergierharze.

7. Verwendung gemäß Anspruch 6, **dadurch gekennzeichnet, dass** es sich um lösemittelhaltige Pigmentpasten handelt.

8. Zusammensetzungen enthaltend Harze gemäß einem oder mehreren der Ansprüche 1 bis 3.

9. Verwendung von Zusammensetzungen gemäß Anspruch 8 zur Herstellung von lösemitthaltigen Lacken und Druckfarben oder Drucklacken und Beschichtungsstoffen.

## Claims

1. Resins that are free-flowing at a temperature of 23°C and a pressure of 101 325 Pa and are based on aliphatic ketones, selected from the group consisting of heptan-2-one, heptan-3-one, heptan-4-one, octan-2-one, octan-3-one, undecan-2-one, 5-methylhexan-2-one (methyl isoamyl ketone) and 2-methylpentan-4-one (methyl isobutyl ketone) or mixtures thereof, and aldehydes selected from the group consisting of formaldehyde, acetaldehyde, n-butyraldehyde and/or isobutyraldehyde, amyl aldehyde and dodecanal, or mixtures thereof where the molar ketone/aldehyde ratio is between 1:1.5 and 1:2.5, having relative molar masses Mn between 350 and 900 g/mol, where the relative molar masses are determined by size exclusion chromatography (SEC).

2. Resins according to Claim 1, **characterized in that** formaldehyde is present as aldehyde in the inventive resins.

3. Resins according to Claim 1 or 2, **characterized in that** the resins have glass transition temperatures of 0°C or less.

4. Process for preparing resins according to Claim 1, comprising the condensation of aldehydes and ketones, the ketones being reacted with the aldehydes in a molar ratio of 1:1.4 to 1:2.5.

5. Process according to Claim 4, **characterized in that** the condensation is effected in the presence of methanol and/or ethanol.

6. Use of resins according to one or more of Claims 1 to 3 as pigment wetting resins and/or dispersing resins.

7. Use according to Claim 6, **characterized in that** the pigments are in solventborne pigment pastes.

8. Compositions comprising resins according to one or more of Claims 1 to 3.

9. Use of compositions according to Claim 8 for production of solventborne varnishes and printing inks or printing varnishes and coating materials.

## Revendications

1. Résine fluide à une température de 23°C et une pression de 101325 Pa à base de cétones aliphatiques, choisie dans le groupe constitué de heptan-2-one, heptan-3-one, heptan-4-one, octan-2-one, octan-3-one, undécan-2-one, 5-méthylhexan-2-one (méthylisoamylcétone) ou 2-méthylpentan-4-one (méthylisobutylcétone) ou leurs mélanges et d'aldéhydes choisies dans le groupe constitué du formaldéhyde, de l'acétaldéhyde, du n-butyraldéhyde et/ou de l'isobutyraldéhyde, de l'amylaldéhyde ainsi que du dodécanal ou de leurs mélanges, où le rapport cétone/aldéhyde se situe entre 1:1,5 et 1:2,5, avec des masses molaires relatives Mn entre 350 et 900 g/mol, les masses molaires relatives étant déterminées par chromatographie d'exclusion stérique (SEC).

2. Résine selon la revendication 1, **caractérisée en ce que** du formaldéhyde est contenu comme aldéhyde dans les résines selon l'invention.

3. Résine selon la revendication 1 ou 2, **caractérisée en ce que** la résine présente des températures de transition vitreuse inférieures ou égales à 0°C.

4. Procédé de fabrication de résines selon la revendication 1, comprenant la condensation d'aldéhydes et de cétones, les cétones étant mises en oeuvre avec les aldéhydes dans un rapport molaire de 1:1,4 à 1:2,5.

5. Procédé selon la revendication 4, **caractérisé en ce que** la condensation se fait en présence de méthanol et/ou d'éthanol.

6. Utilisation de résines selon une ou plusieurs des revendications 1 à 3 comme résines à pigments et/ou comme résines en dispersion.

7. Utilisation selon la revendication 6, **caractérisée en ce qu'**il s'agit de pâtes pigmentées contenant des solvants.

8. Compositions contenant des résines selon au moins une des revendications 1 à 3.

9. Utilisation de compositions selon la revendication 8 pour fabriquer des vernis ou des encres d'imprimerie et des compositions de revêtement contenant des solvants.
